# FASCICULE DE BREVET EUROPEEN

(11) **EP 1 697 593 B1**
(45) Date de publication et mention de la délivrance du brevet: **31.10.2007**
(21) Numéro de dépôt: 04805506.5
(22) Date de dépôt: 22.11.2004
(51) Int. Cl.: E01B 25/28

(54) **ENSEMBLE DE GUIDAGE POUR VEHICULES TERRESTRES**
FÜHRUNGSSYSTEM FÜR FAHRZEUGE
LAND VEHICLE GUIDANCE UNIT

(30) Priorité: 28.11.2003 FR 0313990
(43) Date de publication de la demande: 06.09.2006
(73) Titulaire: LOHR INDUSTRIE, 67980 Hangenbieten (FR)
(72) Inventeur: LOHR, Robert, F-67980 Hangenbieten (FR)
(74) Mandataire: Metz, Paul
(86) Numéro de dépôt international: PCT/FR2004/002975
(87) Numéro de publication internationale: WO 2005/064081

(56) Documents cités:
- DE-A- 4 012 303
- US-A- 5 829 357

## Description

L'invention concerne un ensemble formé d'un galet de guidage du type à mentonnets et d'un rail de guidage sur lequel roule le galet de guidage en vue de servir de référence directionnelle à un véhicule terrestre.

Divers véhicules terrestres utilisent un rail central de guidage DE 40 12 303 A et US 5 829 357 A. Qu'il s'agisse de chariots industriels de manutention ou de véhicules faisant partie d'un manège par exemple de fête foraine ou d'un parcours touristique, mais aussi et surtout de véhicules urbains sur pneus et autoguidés, tous ces véhicules utilisent un galet de guidage se déplaçant sur un rail central afin de suivre un parcours prédéfini.

Ce galet de guidage sert de référence directionnelle et un impératif pour un tel galet est de ne pas quitter le rail de guidage, sans quoi le véhicule le comportant ne serait plus guidé et deviendrait dangereux pour son environnement et entraînerait notamment des risques potentiels pour les utilisateurs ou usagers et pour les personnes se trouvant sur la trajectoire du véhicule. Il s'avère donc de la plus haute importance que le galet comporte des moyens appropriés d'appui, de butée dynamique et de conformation permettant de le maintenir en permanence sur le rail de guidage.

Un autre impératif concerne la stabilité du véhicule qui risque d'être compromise par un trop grand jeu entre le galet et le rail de guidage. Ce jeu entraînerait une incertitude sur la direction exacte à suivre et par là, un manque de stabilité du véhicule en mouvement qui présenterait par conséquent un caractère dangereux en utilisation.

En général, le galet à mentonnets est une structure compacte, d'une seule pièce ou composite dont les diverses parties composantes sont solidaires les unes des autres. Le corps du galet présente une partie centrale de révolution de diamètre inférieur à celui des mentonnets latéraux. En utilisation, le corps du galet tourne sur lui même en appui sur le rail de guidage par sa zone centrale et autour d'un axe sensiblement horizontal. Lors de son déplacement le long du rail de guidage, le corps du galet peut se trouver simultanément en contact avec une pluralité de zones du rail de guidage: d'une part la partie centrale en contact avec la zone supérieure du rail, et d'autre part le bord interne du ou des mentonnet(s) en contact avec le ou les flanc(s) en regard du rail de guidage. La vitesse linéaire du galet aux divers points de contact étant proportionnelle à leur distance respective de l'axe de rotation du galet, il existe alors une disparité entre la vitesse linéaire appliquée à la zone de contact de la partie centrale du galet d'une part, et celle à la zone de contact du ou des mentonnet(s) d'autre part. Du fait de cette disparité des vitesses linéaires, le galet et/ou le rail subissent une usure localisée aux zones de contact des mentonnets avec le rail de guidage. Cet effet se produit notamment mais non exclusivement, lors du roulage en courbe.

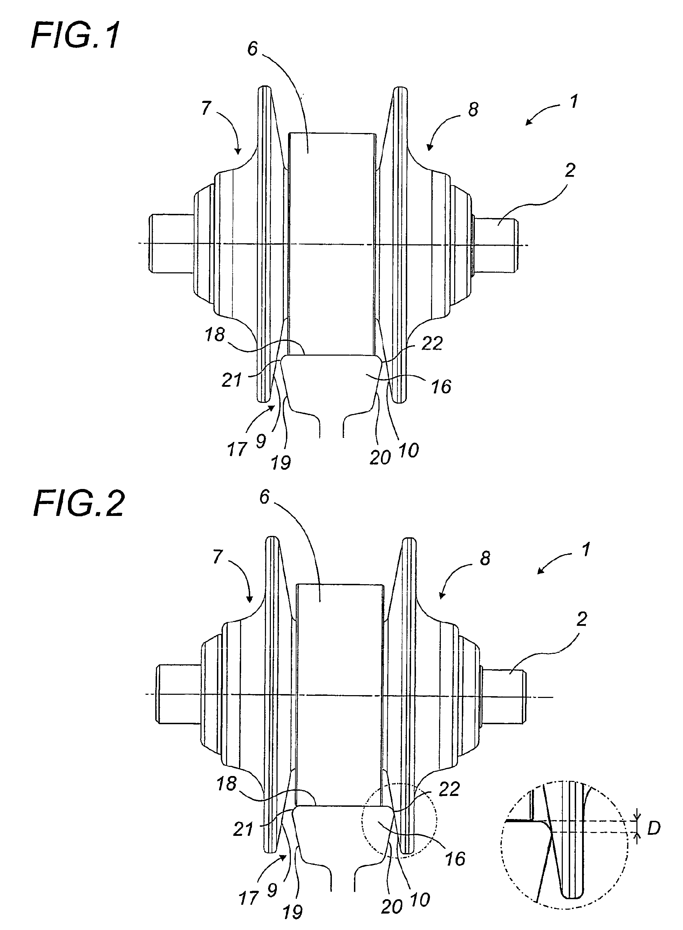

Cette disparité des vitesses linéaires conduit, pour ne pas aggraver l'usure, à une distance "D" (figure 2) la plus faible possible.

L'usure du galet et/ou celle du rail a pour effet de créer un jeu dans la direction qui se traduit rapidement par une instabilité du véhicule en déplacement présentant un danger grandissant avec la vitesse.

L'invention a pour but de palier ces inconvénients majeurs, en fournissant un galet comportant une conformation et des moyens ne provoquant pas de différence de vitesse linéaire entre les parties constitutives du galet et plus particulièrement entre la partie centrale et chaque pièce de flanc adjacente et donc une usure notablement moins importante car chacune de ces pièces tourne à sa propre vitesse adaptée.

Pour résoudre ce problème technique le galet de guidage selon l'invention comporte deux flasques latéraux et un rouleau central, chacun de ces trois éléments étant monté indépendant et libre en rotation autour d'un arbre commun de roulement et de guidage par lequel il est relié à l'ensemble de guidage du véhicule.

L'indépendance et donc la liberté de mouvement entre les différentes parties constitutives du galet permet d'éviter les inconvénients liés aux différences de vitesses linéaires au niveau des zones de contact avec le rail. Ainsi, l'invention permet de diminuer les frottements inégaux sur les différentes parties du galet en contact avec le rail. Elle permet également de recourir à l'utilisation d'un rail de guidage présentant un rayon de courbure plus important au niveau du raccordement de ses flancs avec la table supérieure de roulement du rail, ce qui a pour effet d'augmenter la surface des zones en contact avec le galet et ainsi de répartir tout en la diminuant par l'indépendance des vitesses linéaires, l'usure du galet et celle du rail de guidage.

La moindre usure du couple rail-galet permet de garantir un moindre jeu dans la direction avec comme conséquence une meilleure stabilité de comportement et de conduite du véhicule guidé.

D'autres caractéristiques et avantages de l'invention apparaîtront à la lecture de la description détaillée qui va suivre, description faite en référence aux dessins annexés, dans lesquels:
- la figure 1 est une vue de face du galet de guidage de l'invention représenté en contact avec le rail de guidage et centré sur celui-ci ;
- la figure 2 est une vue de face du galet de guidage de l'invention représenté en contact avec le rail de guidage et décentré sur celui-ci, un des mentonnets latéraux étant en contact avec le rail de guidage avec une représentation en agrandi de la zone encerclée montrant la distance "D" entre la table de roulage et la zone de contact contre un des bords du rail ;
- la figure 3 est une vue latérale du galet de guidage de l'invention représenté en contact avec le rail de guidage ;
- la figure 4 est une vue en coupe selon la ligne 4-4 de la figure 3 ;
- la figure 5 est une vue en coupe selon la ligne 5-5 de la figure 3.

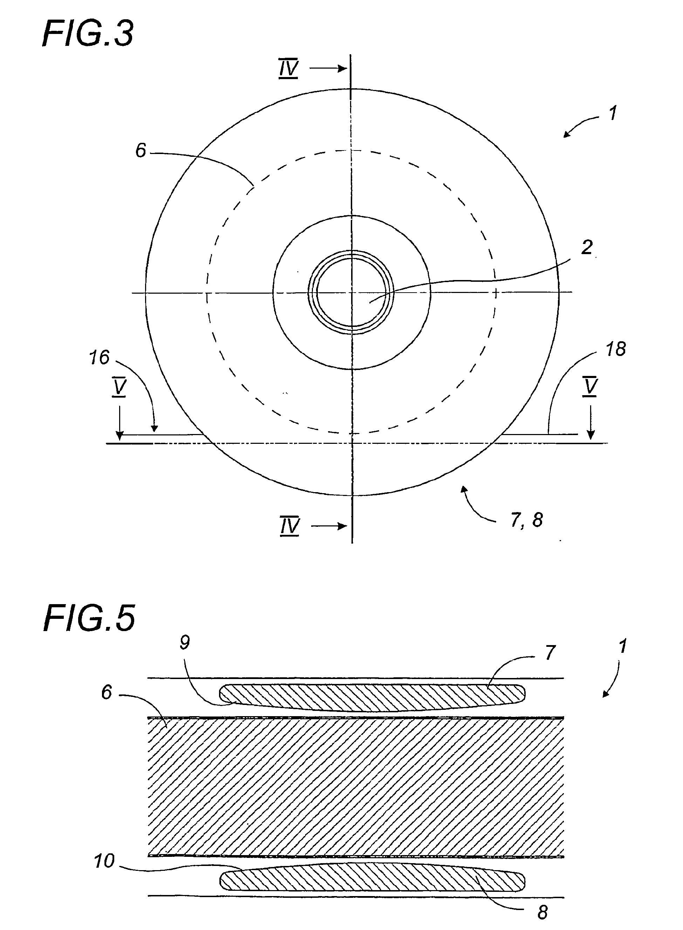

L'ensemble de roulement directionnel à galet et rail de guidage selon la présente invention va maintenant être décrit de façon détaillée en référence aux figures 1 à 5. Les éléments équivalents représentés sur les différentes figures porteront les mêmes références numériques.

L'ensemble de roulement directionnel comprend d'abord un galet de guidage 1. Celui-ci est monté sur un arbre de roulement et de guidage 2 porté par l'ensemble de guidage du véhicule (non représenté) sur lequel tournent au moyen chacun d'un roulement 3, 4 et 5, un rouleau central 6 cylindrique ou à surface de roulement bombée par exemple en tonneau, et deux pièces latérales de flanc ou flasques 7 et 8 du type à mentonnets, dont les faces latérales en regard pouvant être en contact avec le rail sont conformées chacune en disque épais à rampe conique ou tronconique respectivement 9 et 10 convergeant chacune vers une partie centrale de raccordement de forme générale cylindrique ou tronconique respectivement 11 et 12.

L'avantage de la forme conique des faces latérales pouvant arriver en contact avec le rail a pour effet, à forme constante de la surface en regard, de réduire les dimensions de la zone en contact. Cet avantage conjugué à celui de l'absence de vitesses différentielles entre les zones de contact entre le rail et le galet garantit une moindre usure.

En conséquence, lors de la mise légèrement en biais du galet, le frottement se trouve réduit. La tendance à dérailler disparaît entièrement.

Les parties consécutives du galet sont montées à rotation sur l'arbre 2 de roulement et de guidage de la façon suivante. Les parties et surfaces intérieures des pièces constitutives du galet à savoir celles du rouleau central 6 et des deux flasques 7 et 8 sont montées solidaires de la partie extérieure de la cage 13, 14, et 15 respectivement des roulements 3, 4 et 5 alors que les parties intérieures correspondantes de chaque cage sont immobilisées par emmanchement serré ou autre moyen sur l'arbre de roulement et de guidage 2 du galet 1. Dans cette réalisation, les pièces constitutives sont montées à rotation sur l'arbre de roulement et de guidage du galet de guidage, arbre autour duquel ces pièces tournent mais qui reste immobile en rotation et porte celles-ci.

Le galet de guidage tel que décrit ci-dessus est compatible avec un rail de guidage de forme générale carrée avec des flancs verticaux ou quasi verticaux.

On décrira ci-après le rail tel que représenté sur les figures. Il est bien entendu que des rails de profil voisin ou équivalent entrent dans le cadre de la présente invention qui accepte toute une vaste catégorie de profils de rails de guidage.

En fonctionnement, le galet de guidage 1 roule sur un rail de guidage 16 à tête 17 et à table supérieure de roulement 18 plane ou légèrement bombée. Le rail de guidage 16 présente sur ses côtés deux flancs latéraux inclinés 19 et 20 par exemple divergents vers le haut. La surface de raccordement entre chaque flanc 19 et 20 et la table supérieure de roulement 18 est un bord longitudinal arrondi respectivement 21 et 22, dont le rayon de courbure présente une certaine valeur. Le rail de guidage étant symétrique, les bords longitudinaux arrondis 21 et 22 qui bordent la table de roulement 18 sont identiques.

En raison de l'absence de vitesses différentielles linéaires entre les parties constitutives du galet, provenant de la liberté et de l'indépendance de la rotation de chacune des pièces constitutives du galet 1, à savoir le rouleau 6 et les flasques 7 et 8, le rayon de courbure des bords longitudinaux arrondis 21 et 22 peut varier et on peut adopter la forme la mieux adaptée à l'utilisation qui est bien entendu celle qui procure le plus d'avantages. Ainsi, des formes plus saillantes, c'est-à-dire celles qui font saillie vers l'extérieur, présentant un rayon de courbure plus faible procurant un écart moindre entre les vitesses linéaires aux diverses zones de contact, mais un meilleur maintien du galet de guidage sont possibles.

De façon générale, les formes saillantes pour les bords latéraux du rail de guidage sont celles qui font saillie latéralement ou vers le haut ou font saillie latéralement et vers le haut.

Toutes les formes saillantes sont des variantes de conformation des bords longitudinaux arrondis 21 et 22 et à ce titre font partie de la présente invention.

La forme de chaque bord longitudinal arrondi et l'inclinaison de la rampe conique 9 ou 10 de chaque pièce de flanc 7 ou 8 sont telles que la zone de contact de la face intérieure à rampe conique 9 ou 10 de chaque pièce de flanc 7 ou 8 au niveau du bord arrondi correspondant est réduite.

Il existe d'autres formes qui sont celles à plus grand rayon de courbure pour l'arrondi. Le rayon de courbure de l'arrondi des bords latéraux du rail de guidage peut prendre toutes les valeurs compatibles avec les limites des résistances mécaniques des matières utilisées pour le rail de guidage et pour les pièces latérales ou flasques.

On peut citer à titre d'exemple, la limite selon laquelle le rayon de courbure doit être supérieur à 10 % de la largeur du rouleau 6.

Il en est de même en ce qui concerne les variations de forme pour les flancs latéraux du rail de guidage qui peuvent être verticales ou quasi verticales.

La largeur du rouleau central 6 est inférieure à la largeur de la table de roulement 18 du rail de guidage et selon la variante représentée, les pièces latérales de flanc divergent vers l'extérieur par rapport à celui-ci, ce qui permet aux bords longitudinaux arrondis 21 et 22 du rail de guidage d'être saillants.

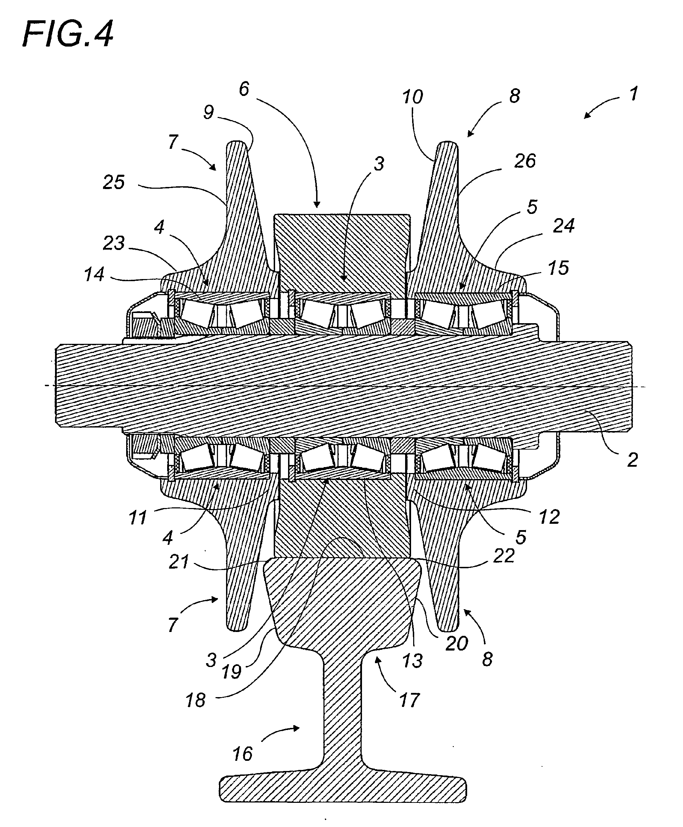

Les flasques ou pièces latérales de flanc 7 et 8 se poursuivent latéralement vers l'extérieur par deux surfaces de raccordement respectivement 23,24 et 25,26 légèrement coniques du type toupie ou diabolo autour de l'axe de rotation 2 (figure 4).

En fonctionnement, le galet de guidage roule centré sur le rail de guidage par sa partie centrale en rouleau 6 plane ou légèrement bombée par exemple en tonneau qui porte sur la table de roulement 18 du rail 16 également plane ou légèrement bombée.

En cas de déport latéral par exemple dans les virages, la face conique du flasque venue en contact avec le bord latéral correspondant du rail assure ainsi une butée latérale dynamique de roulement à contact roulant et/ou glissant de vitesse propre, avec le bord arrondi adjacent du rail de guidage 16. Cette face en contact est appliquée sur ce bord longitudinal arrondi en regard du rail de guidage et en raison de l'indépendance des mouvements des différentes parties constitutives du galet et donc de ce flasque, la surface de butée ne subit qu'une moindre usure.

Ainsi, cette invention permet de diminuer notablement l'intensité des frottements car les vitesses linéaires sont indépendantes entre elles en raison de la liberté de rotation des différentes parties constitutives du galet de guidage 1.

Il s'ensuit une diminution notable de l'usure et du jeu en résultant dans la direction et donc une meilleure stabilité du véhicule guidé.

On peut également envisager de nombreuses variantes des modes de réalisation précédents sans s'écarter du cadre de l'invention.

La technologie utilisée pour monter les différentes pièces constitutives sur et en rotation autour de l'arbre de roulement et de guidage 2 peut varier. Celle pouvant se déduire des dessins consiste à prévoir un collet de butée à l'une des extrémités qui est fermée en partie centrale par un capuchon s'appuyant sur une rondelle d'immobilisation. De l'autre côté on immobilise latéralement l'ensemble des pièces par l'intermédiaire d'un dispositif à écrou freiné avec arrêt par une clavette ou analogue. Le tout est protégé par un capuchon traversé par l'arbre de roulement et de guidage et clipsé contre le rebord de la pièce de flanc adjacente.

## Revendications

1. Ensemble de guidage formé d'un galet de guidage (1) du type à mentonnets pour le guidage d'un véhicule terrestre et d'un rail de guidage (16) à table supérieure (18) sur laquelle roule la partie centrale du galet de guidage (1) **caractérisé en ce que** le galet de guidage (1) comporte, montés à rotation libre sur un même arbre de roulement et de guidage (2), un rouleau central (6) et de part et d'autre de celui-ci deux flasques ou pièces latérales de flanc (7) et (8), chacun de ces trois éléments constitutifs du galet de guidage (1) étant libre en rotation autour de l'arbre de guidage (2) indépendamment les uns des autres et **en ce que** la table de roulement (18) du rail de guidage (16) est limitée latéralement par deux bords longitudinaux arrondis (21) et (22).

2. Ensemble de guidage selon la revendication 1 **caractérisé en ce que** le rouleau central (6) est cylindrique ou légèrement bombé et de largeur inférieure à celle de la table de roulement (18) du rail de guidage.

3. Ensemble de guidage selon la revendication précédente **caractérisé en ce que** le rouleau central (6) est légèrement bombé en tonneau.

4. Ensemble de guidage selon les revendications 1 et 2 **caractérisé en ce que** la table de roulement (18) du rail de guidage est plane ou légèrement bombée et **en ce que** sa partie centrale porte le rouleau central (6) du galet de guidage.

5. Ensemble de guidage selon la revendication 1 **caractérisé en ce que** les deux flasques ou pièces latérales de flanc (7) et (8) du galet de guidage (1) présentent des faces latérales en regard conformées en disque à rampe conique ou tronconique (9) et (10) convergeant vers une partie centrale de raccordement respectivement (11) et (12) de forme générale cylindrique avec la partie centrale (6) du galet de guidage (1).

6. Ensemble de guidage selon l'une quelconque des revendications précédentes **caractérisé en ce que** la forme de chaque bord longitudinal arrondi (21) et (22) du rail de guidage (16) et l'inclinaison de la rampe conique (9) et (10) de chaque flasque ou pièce de flanc (7) et (8) du galet de guidage (1) sont telles qu'est réduite chaque zone de contact de la face intérieure à rampe conique de chaque pièce de flanc (7) et (8) au niveau du bord longitudinal arrondi correspondant (21) ou (22).

7. Ensemble de guidage selon la revendication 1 **caractérisé en ce que** les bords longitudinaux arrondis (21) et (22) du rail de guidage (16) bordant la table de roulement (18) sont saillants.

8. Ensemble de guidage selon la revendication précédente **caractérisé en ce que** les bords longitudinaux arrondis (21) et (22) sont saillants latéralement.

9. Ensemble de guidage selon la revendication 7 **caractérisé en ce que** les bords longitudinaux arrondis (21) et (22) sont saillants vers le haut.

10. Ensemble de guidage selon la revendication 7 **caractérisé en ce que** les bords longitudinaux arrondis (21) et (22) sont saillants latéralement et vers le haut.

11. Ensemble de guidage selon l'une quelconque des revendications 7 à 10 **caractérisé en ce que** la valeur du rayon de courbure des bords longitudinaux arrondis (21) et (22) est choisie inférieure à la valeur limite définie par les résistances mécaniques des matières utilisées pour le rail et pour les flasques.

12. Ensemble de guidage selon l'une quelconque des revendications 7 à 11 **caractérisé en ce que** le rayon de courbure des bords longitudinaux arrondis (21) et (22) est supérieur à 10% de la largeur de la table de roulement (18).

13. Ensemble de guidage selon la revendication précédente **caractérisé en ce que** les deux flasques ou pièces latérales de flanc (7) et (8) du galet de guidage se poursuivent latéralement vers l'extérieur par des surfaces de raccordement légèrement coniques du type en toupie ou diabolo autour de l'arbre de roulement et de guidage (2).

14. Ensemble de guidage selon la revendication 1 **caractérisé en ce que** les différentes parties constitutives du galet de guidage (1) sont montées à rotation par des roulements distincts sur l'arbre de roulement et de guidage (2) pour présenter des mouvements indépendants les uns des autres.

## Claims

1. A guidance unit formed of a guide wheel (1) of the flanged type for guiding a land vehicle and of a guide rail (16) with upper surface (18) on which the central part of the guide wheel (1) runs, **characterized in that** the guide wheel (1) includes, mounted to be freely rotatable on a single rolling and guide shaft (2), a central drum (6) and, on either side of this latter, two flanges or lateral cheek parts (7) and (8), each of the three constituent members of the guide wheel (1) being freely rotatable about the guide shaft (2) independently of one another, and **in that** the running surface (18) of the guide rail (16) is limited laterally by two rounded longitudinal edges (21) and (22).

2. A guidance unit according to claim 1, **characterized in that** the central drum (6) is cylindrical or slightly convex and has a width less than that of the running surface (18) of the guide rail.

3. A guidance unit according to the preceding claim, **characterized in that** the central drum (6) is slightly convex in a barrel shape.

4. A guidance unit according to claim 1 and claim 2, **characterized in that** the running surface (18) of the guide rail is flat or slightly convex, and **in that** its central portion carries the central drum (6) of the guide wheel.

5. A guidance unit according to claim 1, **characterized in that** the two flanges or lateral cheek parts (7) and (8) of the guide wheel (1) have opposed lateral faces configured as a disc with conical or frustoconical ramps (9) and (10) converging towards a central portion of generally cylindrical shape, (11) and (12) respectively, for connection with the central part (6) of the guide roller (1).

6. A guidance unit according to any one of the preceding claims, **characterized in that** the shape of each rounded longitudinal edge (21) and (22) of the guide rail (16) and the inclination of the conical ramp (9) and (10) of each flange or cheek portion (7) and (8) of the guide wheel (1) are such that each area of contact of the inner face, having the conical ramp, of each cheek portion (7) and (8) at the corresponding rounded longitudinal edge (21) or (22) is reduced.

7. A guidance unit according to claim 1, **characterized in that** the rounded longitudinal edges (21) and (22) of the guide rail (16) bordering the running surface (18) project.

8. A guidance unit according to the preceding claim, **characterized in that** the rounded longitudinal edges (21) and (22) project laterally.

9. A guidance unit according to claim 7, **characterized in that** the rounded longitudinal edges (21) and (22) project upwards.

10. A guidance unit according to claim 7, **characterized in that** the rounded longitudinal edges (21) and (22) project laterally and upwards.

11. A guidance unit according to any one of claims 7 to 10, **characterized in that** the value of the radius of curvature of the rounded longitudinal edges (21) and (22) is selected to be less than the limit value defined by the mechanical strengths of the materials used for the rail and for the flanges.

12. A guidance unit according to any one of claims 7 to 11, **characterized in that** the radius of curvature of the rounded longitudinal edges (21) and (22) is greater than 10% of the width of the running surface (18).

13. A guidance unit according to the preceding claim, **characterized in that** the two flanges or lateral cheek parts (7) and (8) of the guide wheel continue laterally outwardly via slightly conical connecting surfaces of the spinning-top or diabolo type around the rolling and guide shaft (2).

14. A guidance unit according to claim 1, **characterized in that** the different constituent parts of the guide wheel (1) are rotatably mounted by means of separate bearings on the rolling and guide shaft (2) in order to have movements independent of one another.

## Patentansprüche

1. Führungseinheit, welche aus einer Führungsrolle (1) nach Art eines Spurkranzes zur Führung eines Fahrzeugs auf dem Boden und einer Führungsschiene (16) mit einem oberen Tableau (18) gebildet ist, auf welcher der zentrale Abschnitt der Führungsrolle (1) rollt, **dadurch gekennzeichnet, dass** die Führungsrolle (1) eine auf ein und derselben Roll- und Führungswelle (2) montierte zentrale Rolle (6) und beiderseits derselben zwei seitliche Seitenwangen oder -teile (7) und (8) aufweist, wobei jedes dieser drei konstitutiven Elemente der Führungsrolle (1) unabhängig voneinander um die Führungswelle (2) frei drehbar ist, und dass das Rolltableau (18) der Führungsschiene (16) seitlich durch zwei abgerundete Längskanten (21) und (22) begrenzt ist.

2. Führungseinheit nach Anspruch 1, **dadurch gekennzeichnet, dass** die zentrale Rolle (6) zylindrisch oder geringfügig gewölbt ist und eine gegenüber dem Rollplateau (18) der Führungsschiene geringere Breite besitzt.

3. Führungseinheit nach dem vorangehenden Anspruch, **dadurch gekennzeichnet, dass** die zentrale Rolle (6) geringfügig nach Art eines Fasses gewölbt ist.

4. Führungseinheit nach den Ansprüchen 1 und 2, **dadurch gekennzeichnet, dass** das Rollplateau (18) der Führungsschiene eben oder geringfügig gewölbt ist, und dass sein zentraler Abschnitt die zentrale Rolle (6) der Führungsrolle trägt.

5. Führungseinheit nach Anspruch 1, **dadurch gekennzeichnet, dass** die beiden seitlichen Seitenwangen oder -teile (7) und (8) der Führungsrolle (1) gegenüberliegende Seitenflächen aufweisen, welche an Scheiben mit einer konischen oder kegelförmigen Steigung (9) und (10) angepasst sind, die jeweils in Richtung eines zentralen Verbindungsabschnittes (11) und (12) in der allgemeinen Form eines Zylinders mit dem zentralen Bereich (6) der Führungsrolle (1) konvergieren.

6. Führungseinheit nach einem der vorangehenden Ansprüche, **dadurch gekennzeichnet, dass** die Form einer jeden abgerundeten Längskante (21) und (22) der Führungsschiene (16) sowie die Neigung der konischen Steigung (9) und (10) einer/eines jeden Seitenwange oder Seitenteils (7) und (8) der Führungsrolle (1) derart ausgebildet sind, dass jeder Kontaktbereich der Innenseite der konischen Steigung eines jeden Seitenteils (7) und (8) auf das Niveau der entsprechenden abgerundeten Längskante (21) oder (22) reduziert ist.

7. Führungseinheit nach Anspruch 1, **dadurch gekennzeichnet, dass** die an das Rollplateau (18) angrenzenden, abgerundeten Längskanten (21) und (22) der Führungsschiene (16) von Vorsprüngen sind.

8. Führungseinheit nach dem vorangehenden Anspruch, **dadurch gekennzeichnet, dass** die abgerundeten Längskanten (21) und (22) von seitlichen Vorsprüngen gebildet sind.

9. Führungseinheit nach Anspruch 7, **dadurch gekennzeichnet, dass** die abgerundeten Längskanten (21) und (22) von nach oben gerichteten Vorsprüngen gebildet sind.

10. Führungseinheit nach Anspruch 7, **dadurch gekennzeichnet, dass** die abgerundeten Längskanten (21) und (22) von seitlichen und nach oben gerichteten Vorsprüngen gebildet sind.

11. Führungseinheit nach einem der Ansprüche 7 bis 10, **dadurch gekennzeichnet, dass** der Wert des Krümmungsradius' der abgerundeten Längskanten (21) und (22) geringer gewählt ist als der Grenzwert, welcher durch die mechanischen Festigkeitswerte der für die Schiene und für die Seitenwangen eingesetzten Materialien definiert ist.

12. Führungseinheit nach einem der Ansprüche 7 bis 11, **dadurch gekennzeichnet, dass** der Krümmungsradius der abgerundeten Längskanten (21) und (22) größer ist als 10% der Breite des Rollplateaus (18).

13. Führungseinheit nach dem vorangehenden Anspruch, **dadurch gekennzeichnet, dass** sich die beiden seitlichen Seitenwangen oder -teile (7) und (8) der Führungsrolle durch geringfügig konische Verbindungsflächen nach Art eines Kreisels oder Schleuderkreisels um die Roll- und Führungswelle (2) seitlich nach außen fortsetzen.

14. Führungseinheit nach Anspruch 1, **dadurch gekennzeichnet, dass** die verschiedenen konstitutiven Bestandteile der Führungsrolle (1) durch getrennte Lager drehbar auf der Roll- und Führungswelle (2) montiert sind, um unabhängig voneinander Bewegungen ausführen zu können.
